# EUROPEAN PATENT APPLICATION

(11) **EP 4 787 182 A1**
(43) Date of publication of application: **05.08.2026**
(21) Application number: 25225382.8
(22) Date of filing: 19.12.2025
(51) Int. Cl.: G06F 16/29, G06F 16/3329

(54) **METHOD AND SYSTEM FOR ENHANCED PROCESSING OF QUERIES ABOUT HISTORICAL VESSEL INFORMATION USING AGENTIC LLMS**

(30) Priority: 31.01.2025 US 202563752252 P
(71) Applicant: Global Spatial Technology Solutions Inc., Dartmouth, NS B27 4M9 (CA)
(72) Inventor: Borda Beltran, Diana Carolina, Dartmouth, NS B2Y 4M9 (CA); Chen, Changheng, Dartmouth, NS B2Y 4M9 (CA); Protich, Jennifer, Dartmouth, NS B2Y 4M9 (CA); Heydarlaki, Ramin, Dartmouth, NS B2Y 4M9 (CA); Alfaro Suzan, Ana Luisa, Dartmouth, NS B2Y 4M9 (CA)
(74) Representative: Porta & Consulenti Associati S.p.A.

(57) **Abstract**

A computer-implemented method for processing a natural language question related to maritime vessel tracking is described. The method includes receiving, from a user device, a user query, the user query comprising the natural language question related to maritime vessel tracking, selecting, at a processor in communication with the network device, using a decision-making agent configured to use a large language model, a data retrieval function from a plurality of data retrieval functions based on the maritime question type, generating, at the processor, using the decision-making agent, the data retrieval function, and the one or more maritime identifiers, one or more relevant output data related to the maritime question type and the one or more maritime attributes, and sending, at the network device, to the user device, a user response based on the one or more relevant output data, wherein the user response comprises an answer to the natural language question.

## Description

### FIELD

The described embodiments relate to natural language processing in a maritime context. Specifically, to answering natural language questions relating to maritime topics such as historical vessel tracking.

### INTRODUCTION

Global shipping poses many risks, including national security risks, risks related to communicable diseases, supply chain disruptions, and variable costs (including loading/unloading costs and insurance costs). Analysis of vessel history data may assist in mitigating the aforementioned risks by in uncovering unusual patterns and improving maritime situational awareness.

Vessel data may be obtained from various sources. Shipping vessels are tracked using vessel tracking devices such as Automatic Identification Systems (AIS) that include vessel-based transceiver systems. Each vessel transmits data including unique identification, position, course, and speed, amongst other things. The vessel may receive and display this information on an electronic chart display and information system (ECDIS). Shore-based tracking can include AIS base stations, and vessel traffic services (VTS) that may be provided at a harbor or port which provide functionality similar to air traffic control systems for aircraft.

AIS transceivers have been mandatory since the International Maritime Organization's (IMO) International Convention for the Safety of Life at Sea (SOLAS) for international voyaging ships with 300 or more gross tonnage (GT), and all passenger ships regardless of size. AIS has been implemented first as a terrestrial-based system (T-AIS) and later as a satellite-based system (S-AlS).

AIS data providers may provide real time or historical AIS data. However, it can be challenging to interact with historical data AIS data. The datasets associated with such data can often be large and difficult to sort through, especially for those with limited technical ability.

### SUMMARY

In a first aspect, in accordance with one or more embodiments, there is provided a computer-implemented method for processing a natural language question related to maritime vessel tracking. The method includes: receiving, at a network device, from a user device, a user query, the user query comprising the natural language question related to maritime vessel tracking, the user query comprising a maritime question type and one or more maritime identifiers; selecting, at a processor in communication with the network device, using a decision-making agent, a data retrieval function from a plurality of data retrieval functions based on the maritime question type, wherein the data retrieval function is configured to generate one or more relevant output data related to the maritime question type based on the one or more maritime identifiers; and generating, at the processor, using the decision-making agent, data retrieval function, and one or more maritime identifiers, one or more relevant output data related to the maritime question type and the one or more maritime attributes; sending, at the network device, to the user device, a user response based on the one or more relevant output data, wherein the user response comprises an answer to the natural language question.

In one or more embodiments, the generating the one or more relevant output data may comprise: generating, at the processor, using the decision-making agent, one or more parameters for the data retrieval function based on the user query and the one or more maritime identifiers; and generating, at the processor, using the decision-making agent, the one or more relevant output data using the data retrieval function based on the one or more parameters.

In one or more embodiments, the data retrieval function may comprise an API function corresponding to an API endpoint of a maritime database system, the API endpoint configured to retrieve the one or more outputs from the maritime database system.

In one or more embodiments, the decision-making agent may be configured to use a large language model (LLM) in operating; the selecting, using the decision-making agent, the data retrieval function further comprises using the LLM; and the generating, using the decision-making agent, the one or more relevant output data further comprises using the LLM.

In one or more embodiments, the selecting, using the decision-making agent, a data retrieval function from a plurality of data retrieval functions may further comprise: sending, from the decision-making agent to the LLM, a first prompt, the first prompt comprising the user query and a list of data retrieval functions corresponding to the plurality of data retrieval functions; generating, at the LLM, a decision to invoke the data retrieval function based on the list of data retrieval functions and the user query.

In one or more embodiments, the generating or more parameters for the data retrieval function may comprise: generating, at the LLM, the one or more parameters for the data retrieval function based on the user query and the one or more maritime identifiers; and the generating the one or more relevant output data using the data retrieval function based on the one or more parameters may comprise: making an API call comprising the one or more parameters to the API endpoint to retrieve the one or more relevant output data.

In one or more embodiments, the method may further comprise selecting, at the processor, using the decision-making agent, a second data retrieval function from the plurality of data retrieval functions corresponding to the maritime question type based on the one or more relevant output data, wherein the second data retrieval function is configured to generate a second one or more relevant output data related to the maritime question type based on the one or more maritime identifiers and the one or more relevant output data.

In one or more embodiments, the one or more relevant output data may comprise a static value; and the second one or more relevant output data may comprise a live updated value.

In one or more embodiments, the one or more relevant output data may comprise user specific information associated with a user of the user device; and the one or more parameters for the data retrieval function may comprise a credential of the user.

In one or more embodiments, the method may further comprise generating, at the processor, using the decision-making agent, the user response based on the one or more relevant output data and the user query.

In one or more embodiments, the method may further comprise sending, at the network device, data corresponding to a plurality of user interface elements to the user for rendering a user interface on the user device, wherein at least one user interface element of the plurality of user interface elements comprises a text output element configured to display the user response.

In one or more embodiments, the user response may comprise at least one geographical reference, and the at least one user interface element may further comprise a map element, and the data corresponding to the plurality of user interface elements may comprise data corresponding to the geographical reference on the map element.

In one or more embodiments, the geographical reference may comprise a user defined geographical reference defined by the user stored on the maritime database system.

In one or more embodiments, the one or more maritime identifiers may comprise a vessel identifier corresponding to a maritime vessel.

In one or more embodiments, at least one of the one or more relevant output data and the second one or more relevant output data may comprise historical vessel tracking data.

In one or more embodiments, the one or more relevant output data may be processed data derived from automatic identification system data.

In one or more embodiments, the data retrieval function may be configured to provide a size-constrained response related to the maritime question type and the maritime identifier.

In a second aspect, in accordance with one or more embodiments, there is provided a system for processing a natural language question related to maritime vessel tracking. The system comprises: a network device, configured to: receive, from a user device, a user query, the user query comprising the natural language question related to maritime vessel tracking, the user query comprising a maritime question type and one or more maritime identifiers; and send, to the user device, a user response based on the one or more relevant output data, wherein the user response comprises an answer to the natural language question; and a processor in communication with the network device, configured to: select, using a decision-making agent, a data retrieval function from a plurality of data retrieval functions based on the maritime question type, wherein the data retrieval function is configured to generate one or more relevant output data related to the maritime question type based on the one or more maritime identifiers; and generate, using the decision-making agent, data retrieval function, and one or more maritime identifiers, one or more relevant output data, the one or more relevant output data.

In one or more embodiments, the processor may be configured to generate the one or more relevant output data by: generating, using the decision-making agent, one or more parameters for the data retrieval function based on the user query and the one or more maritime identifiers; and generating, using the decision-making agent, the one or more relevant output data using the data retrieval function based on the one or more parameters.

In one or more embodiments, the data retrieval function may comprise an API function corresponding to an API endpoint of a maritime database system, the API endpoint configured to retrieve the one or more outputs from the maritime database system.

In one or more embodiments, the decision-making agent may be configured to use a large language model (LLM) in operating; the processor being configured to select, using the decision-making agent, a data retrieval function, may further comprise using the LLM; and the processor being configured to generate, using the decision-making agent, data retrieval function, and one or more maritime identifiers, one or more relevant output data, may further comprise using the LLM.

In one or more embodiments, the processor may be further configured to select, using the decision-making agent, a data retrieval function from a plurality of data retrieval functions by: sending, from the decision-making agent to the LLM, a first prompt, the first prompt comprising the user query and a list of data retrieval functions corresponding to the plurality of data retrieval functions; and generating, at the LLM, a decision to invoke the data retrieval function based on the list of data retrieval functions and the user query.

In one or more embodiments, the processor may further be configured to generate one or more parameters for the data retrieval function by: generating, at the LLM, the one or more parameters for the data retrieval function based on the user query and the one or more maritime identifiers; and the processor may further be configured to generate the one or more relevant output data using the data retrieval function based on the one or more parameters by: making an API call comprising the one or more parameters to the API endpoint to retrieve the one or more relevant output data.

In one or more embodiments, the processor may further be configured to: select, using the decision-making agent, a second data retrieval function from the plurality of data retrieval functions corresponding to the maritime question type based on the one or more relevant output data, wherein the second data retrieval function is configured to generate a second one or more relevant output data related to the maritime question type based on the one or more maritime identifiers and the one or more relevant output data.

In one or more embodiments, the one or more relevant output data may comprise a static value; and the second one or more relevant output data may comprise a live updated value.

In one or more embodiments, the one or more relevant output data may comprise user specific information associated with a user of the user device; and the one or more parameters for the data retrieval function comprise a credential of the user.

In one or more embodiments, the processor may be further configured to: generate, using the decision-making agent, the user response based on the one or more relevant output data and the user query.

In one or more embodiments, the network device may be further configured to: send, to the user device, data corresponding to a plurality of user interface elements to the user for rendering a user interface on the user device, wherein at least one user interface element of the plurality of user interface elements comprises a text output element configured to display the user response.

In one or more embodiments, the user response may comprise at least one geographical reference, and the at least one user interface element further comprises a map element, and the data corresponding to the plurality of user interface elements comprises data corresponding to the geographical reference on the map element.

In one or more embodiments, the geographical reference may comprise a user defined geographical reference defined by the user stored on the maritime database system.

In one or more embodiments, the one or more maritime identifiers may comprise a vessel identifier corresponding to a maritime vessel.

In one or more embodiments, at least one of the one or more relevant output data and the second one or more relevant output data may comprise historical vessel tracking data.

In one or more embodiments, the one or more relevant output data processed may comprise data derived from automatic identification system data.

In one or more embodiments, the data retrieval function may be configured to provide a size-constrained response related to the maritime question type and the maritime identifier.

### DRAWINGS

A preferred embodiment will now be described in detail with reference to the drawings, in which:
FIG. 1 shows a schematic diagram of an example environment in which a system for processing a natural language question related to maritime vessel tracking can be used in accordance with some embodiments.
FIG. 2 shows a schematic diagram of an example server device in accordance with some embodiments.
FIG. 3 shows a schematic diagram of an example maritime database system in accordance with some embodiments.
FIG. 4 shows an example method for processing a natural language question related to maritime vessel tracking in accordance with some embodiments.
FIG. 5 shows an example user interface in accordance with some embodiments.
FIG. 6 shows an example user interface in accordance with some embodiments.
FIG. 7 shows an example user interface in accordance with some embodiments.

### DESCRIPTION OF VARIOUS EMBODIMENTS

It will be appreciated that numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description and the drawings are not to be considered as limiting the scope of the embodiments described herein in any way, but rather as merely describing the implementation of the various embodiments described herein.

It should be noted that terms of degree such as "substantially", "about" and "approximately" when used herein mean a reasonable amount of deviation of the modified term such that the end result is not significantly changed. These terms of degree should be construed as including a deviation of the modified term if this deviation would not negate the meaning of the term it modifies.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

The embodiments of the systems and methods described herein may be implemented in hardware or software, or a combination of both. These embodiments may be implemented in computer programs executing on programmable computers, each computer including at least one processor, a data storage system (including volatile memory or nonvolatile memory or other data storage elements or a combination thereof), and at least one communication interface. For example and without limitation, the programmable computers (referred to below as computing devices) may be a server, network appliance, embedded device, computer expansion module, a personal computer, laptop, personal data assistant, cellular telephone, smart-phone device, tablet computer, a wireless device or any other computing device capable of being configured to carry out the methods described herein.

In some embodiments, the communication interface may be a network communication interface. In embodiments in which elements are combined, the communication interface may be a software communication interface, such as those for interprocess communication (IPC). In still other embodiments, there may be a combination of communication interfaces implemented as hardware, software, and a combination thereof.

Program code may be applied to input data to perform the functions described herein and to generate output information. The output information is applied to one or more output devices, in known fashion.

Each program may be implemented in a high level procedural or object oriented programming and/or scripting language, or both, to communicate with a computer system. However, the programs may be implemented in assembly or machine language, if desired. In any case, the language may be a compiled or interpreted language. Each such computer program may be stored on a storage media or a device (e.g. ROM, magnetic disk, optical disc) readable by a general or special purpose programmable computer, for configuring and operating the computer when the storage media or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

Furthermore, the systems, processes and methods of the described embodiments are capable of being distributed in a computer program product comprising a computer readable medium that bears computer usable instructions for one or more processors. The medium may be provided in various forms, including one or more diskettes, compact disks, tapes, chips, wireline transmissions, satellite transmissions, internet transmission or downloads, magnetic and electronic storage media, digital and analog signals, and the like. The computer useable instructions may also be in various forms, including compiled and non-compiled code.

Various embodiments have been described herein by way of example only. Various modifications and variations may be made to these example embodiments without departing from the spirit and scope of the invention, which is limited only by the appended claims. Also, in the various user interfaces illustrated in the figures, it will be understood that the illustrated user interface text and controls are provided as examples only and are not meant to be limiting. Other suitable user interface elements may be possible.

As described above, it can be difficult to interact with historical data relating to maritime vessels, particularly if the user has limited technical knowledge. User friendly methods may include interacting with the data through features such as maps and graphs. While these features can be useful for real-time visualization, or showing historical trends, such features may not be sufficiently flexible for deeper interaction with historical data or more complex datasets.

The presently disclosed systems and methods may provide for means to interact with the data through natural language queries. Specifically, the presently disclosed systems and methods may leverage the capabilities of large language models (LLMs) to facilitate the described interactions. Allowing user interaction with the data through natural language questions may enhance the ability of users to identify risks, unusual patterns, and improve general maritime situational awareness.

The presently described systems and methods may leverage the ability of LLMs to interact with external tools, such as external sources of data or specifically defined functions, to supplement its' ability to answer questions. This may be accomplished through the use of agents, or through natively supported functionality implemented in various architectures. For example, while LLMs may lack inherent access to databases, they can retrieve external data by, for example, invoking API functions through integrated systems. For instance, predefined functions (e.g., direct API integrations) can be used. Alternatively or additionally, agent frameworks (e.g., LangChain) may be implemented that orchestrate these calls on their behalf.

LLMs may be trained on extensive datasets, which may contain terabytes, if not petabytes, of data. As such, LLMs may exhibit general proficiency in answering questions related to most conversational topics. In the maritime context, testing has shown that models exhibit high accuracy in some maritime related tasks, such as calculating additional travel time, estimating arrival windows, adjusting speed based on conditions, and identifying high-traffic ports. LLMs also exhibit capability in addressing regulatory inquiries, including wastewater capacity conventions, SOLAS pressure head requirements, and speed calculations under special circumstances. However, LLMs may not exhibit sufficient accuracy in areas that require deeper understanding of maritime context, such as navigation, port intricacies, specific regulations, ship characteristics, and the impact of weather forecasting on navigation. As such, providing access to sources of external data relating to maritime topics such as vessel tracking could improve LLM performance in the maritime context.

Many external sources of vessel navigational data may be available. AIS is a tracking system used in the maritime industry as a standard. The use of AIS is mandated by international maritime conventions. Vessels are equipped with transponders, which broadcast such information as vessel identity, position, speed, and course at regular intervals over radio waves. This information may be collected, for example, via satellite by AIS data providers, which may provide access to the collected data as a service.

Historical AIS data may be provided by AIS data providers in such form as, for example, raw data, spreadsheets, or databases. However, such data from such sources may not be easily usable by LLMs. Means have to be devised for interfacing LLMs with such datasets, including querying and filtering the data. Additionally, filtering or querying of such datasets may sometimes return a large dataset, even if a large dataset is not intended to be retrieved. The LLM may need to analyze all of this information to produce an output. However, processing a large sized dataset in a single prompt may result in many drawbacks. For one, LLMs may not be configured to accept large sized datasets as an input. For example, many LLMs have a maximum token limit (e.g., 8,192 for GPT-4). If the input exceeds this limit, it may need to be truncated, resulting in the loss of information. Additionally, even for models that have higher token limits, the text may not be processed effectively, as LLMs may struggle to maintain the context of the prompt or identify the most relevant information in the prompt, leading to less accurate or relevant responses. With sufficiently large inputs that exceed the LLM's context window, the model may "forget" earlier parts of the prompt, or may struggle to maintain coherence across the entirety of the input. Further, large sized input prompts may increase the cost of processing. For externally hosted models, this may result in higher costs paid by the user of the LLM, as many LLM service providers charge based on the number of tokens processed. For locally hosted models, this may increase computational resource usage in the form of processing power and memory. This may result in greater power consumption and leaving fewer resources available for other processes.

Additionally, many questions relating to maritime topics may require consultation of multiple sources to obtain an answer. For example, a user may ask a question like "what is the location of the 'CONSTITUTION'"? This may require consultation of a first data source that contains IMO numbers of vessels to determine an IMO number of the vessel. Then, a source may be consulted that contains up-to-date location data of vessels by IMO number. Thus, ensuring that responses returned from these external sources are free from unnecessary data, and are targeted towards the desired answer, may improve performance of the LLM in such contexts.

As such, it would be advantageous to provide the LLM with navigational data in the form of curated and pre-computed data, coupled with an API interface that returns specific, relevant data for the topic of interest. For example, integrating LLM functionality with proprietary sources of extensively curated historical navigational data, from sources such as OCIANA's maritime data warehouse provided by Global Spatial Technology Solutions (GSTS), could allow the LLM to access relevant information relating to maritime vessel tracking in an efficient manner, thus resulting in improved question response performance in the maritime context.

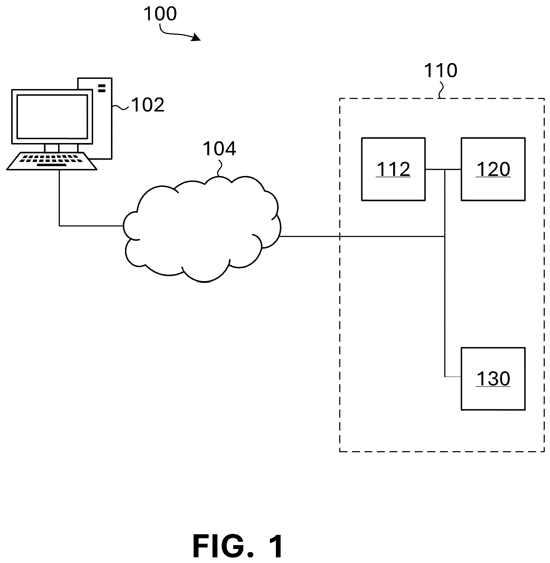

Reference is first made to FIG. 1, which shows an example system 110 for improved natural language processing of vessel tracking queries and an example environment 100 in which system 110 may be used. System 110 may include a decision-making agent 112, a large-language-models (LLM) 120, and a maritime database system 130, all in communication with one another. Agent 112, LLM 120, and maritime database system 130 may be implemented on a single device, such as a server. Alternatively, various parts of system 110 may be implemented on different devices, such as multiple distributed servers, on the same network. Environment 100 may include a user device 102 operated by a user in communication with system 110 through network 104.

Network 104 may be a communication network such as the Internet, a Wide-Area Network (WAN), a Local-Area Network (LAN), or another type of network. Network 104 may include a point-to-point connection, or another communications connection between two nodes.

The user may use user device 102 to communicate with system 110 for the purpose of submitting a user query containing a natural language question, and receiving a response to the natural language question. The natural language question may be a question relating to vessel tracking. Specifically, the question could be related to maritime vessel tracking. System 110 may be configured to receive the user query containing the question and provide an answer thereto. Some example natural language questions relating to maritime vessel tracking may include:
- "What ports does the 'CONSTITUTION' typically call on?"
- Which of these vessels have visited China in the last 6 months?
- How many Cargo Ships are currently anchored in Montreal?
- Which cargo vessels emitted the lowest amount of Co2?
- Which port are all Algoma vessels currently located?

System 110 includes a decision-making agent 112 configured to receive the user query containing the natural language question, determine various actions to perform in the process of answering the question, invoke a variety of tools to assist with performing the actions, and ultimately produce an answer the natural language question. To this end, decision-making agent 112 may use LLM 120 to process various inputs and generate outputs. The outputs may include an answer, the input question, or intermediary steps. The intermediary steps could include actions to be taken, such as using external tools or invoking certain functions. Decision-making agent 112 may include any system that uses an LLM to determine future actions based on previous actions and received inputs, and is capable of invoking tools or functions based on the LLM's decisions. Decision-making agent 112 may be implemented as a software module configured to use LLM 120 to perform decision-making. For example, decision-making agent 112 could be implemented using agent frameworks such as LangChain, DSPy agent, a custom agent built with low-level libraries, or any other framework that supports tool-augmented reasoning and action execution.

LLM 120 may be a large language model for facilitating the decision-making and reasoning process of the agent. In some embodiments, LLM 120 may include more than one LLM. LLM 120 may include any pre-trained large language models that is capable of communicating with agent 112 to receive input prompts and produce output answers. For example, LLM 120 can include such models as LLaMa 2, LLaMa 3, Mistral 7B, and Zephyr 7B.

LLM 120 may be a locally hosted model. For example, LLM 120 could be a locally hosted version of LlaMa. Model weights for LLaMa may be obtained from Meta and may be configured as a local model using a framework such as llama.cpp. In some embodiments, the local model may be configured to expose an API to facilitate interaction with agent 112. In some embodiments, the agent 112 can interact directly with LLM 120 through software libraries that can facilitate communication between the agent and LLM.

In some embodiments, LLM 120 can be externally hosted. The agent 112 may be configured to communicate with LLM 120 over network 104 via an API. For example, a cloud LLM service such as Amazon SageMaker JumpStart may be used, and SageMaker endpoints can be used by agent 112 to interact with the LLM 120.

Decision-making agent 112 may use LLM 120 to perform decision-making tasks such as determining the next actions to perform based on received inputs. Agent 112 may be configured to receive an input, pass a prompt to LLM 120 based on the input, and act in accordance with the output of the LLM 120. For example, agent 112 may be configured to act in accordance with the ReAct framework, in which LLMs are instructed configured to articulate a step-by-step reasoning process for making a decision, determine various actions to be performed based on the reasoning, and iterate/refine their reasoning process based on the outcome of the actions.

Agent 112 may be configured to utilize external tools to resolve the query. The external tools may include functions. A list of available tools may be configured for the agent to use in answering questions. Agent 112 may use LLM 120 to decide on a next step, while providing a list of available tools to use. LLM 120 may decide to invoke a tool from the list of available tools as the next step. The tool may be, for example, a function configured to return a result based on a number of input arguments.

Tools may contain specialized functions or routines for facilitating the completion of a specific task. For example, a tool could include a calculator function for performing arithmetic when a math problem is encountered by LLM 120. A list of tools may be maintained, which may include metadata relating to the tools, such as names and descriptions for each function.

The tools may include functions related to maritime vessel tracking. Tools 132 could include API functions for making an API calls to a specified API endpoint. For instance, a function could be configured to make an API call to a database system to retrieve information from the database. If the agent determines it would be helpful to have said information in resolving the question, the agent may use the tool.

In some embodiments, a listing of available tools may be passed to agent 112 during initialization. For example, for agents created using LangChain or a custom LLamaCpp agent framework, a set of functions may be stored as a list, which can then be passed to the agent as a parameter during initialization, thus making the selected tools available to the agent for use. In some embodiments, the list of tools can be passed to the agent during runtime. For example, a number of functions can be stored in a file that can be accessed by the agent 112 or LLM 120 during decision making. Alternatively, one or more functions can be passed to the LLM 120 entirely as a part of a prompt.

In some embodiments, LLM 120 itself can be capable of using external tools. For example, an LLM may be natively capable of function calling, in which LLM 120 may be able to make certain function calls without the use of agent 112 to invoke the function. In such instances, LLM 120 may determine what function(s) should be called, generate arguments for the function, invoke the function, and return the result directly. For example, a model that natively supports function calling, such as OpenAl GPT-4, or Llama 3.1, can be used.

Agent 112 may provide a list of tools to LLM 120. Based on an input question, LLM 120 may decide, as a next action, to invoke a tool. Agent 112 may be configured to invoke the tool upon the LLM 120 deciding to do so. For example, agent 112 may pass a list of tools as a prompt to LLM 120 in addition to a user query. LLM 120 may analyze the user query as well as the list of tools to determine next steps, which may involve invoking a tool. LLM 120 may further determine arguments to pass to the tools, if required. Agent 112 may then invoke the selected tools with appropriate arguments.

In some embodiments, the tools 132 may be configured to validate inputs and outputs for adherence to certain rules and schemas. For example, a data validation model can be used to validate inputs to the tool and outputs of the tool. For example, an input model and output model can be defined in Pydantic. The tool may then be configured to use the Pydantic models to perform data validation.

Agent 112 may provide the LLM with additional resources in the form of contextual information, such as a memory of previous inputs and outputs. For example, agent 112 may implement a memory. The memory may contain, for example, a history of past inputs and outputs of the LLM, as well as inputs and outputs of a tool. Each time agent 112 uses LLM 120 to reason, agent 112 may provide LLM 120 with the memory contents to facilitate improved chain-of-thought reasoning. For example, agent 112 may construct a prompt that includes the user query and the memory, thus allowing the LLM 120 to continue the chain of thought contained in previous conversations.

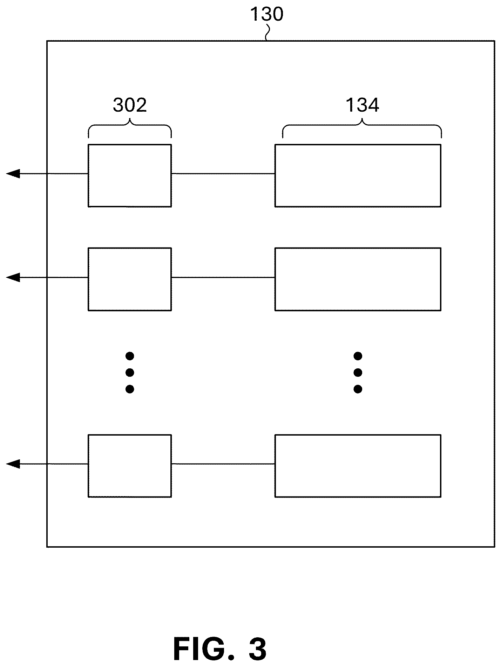

Maritime database system 130 may provide external data relating to maritime topics. The data may include historical vessel tracking data, which may include or be derived from AIS data. Referring to FIG. 3, maritime database system 130 may include a plurality of tables 134 for addressing various queries. Each table of tables 134 may be specifically designed to address a particular query. For example, one or more tables could be provided for topic such as: vessel current position, vessel last location, vessel characteristics, vessel port visits, vessel rendezvous history, dark vessel detections, vessel greenhouse gas (GHG) emissions, geofences, and other similar topics. For example, maritime database system 130 could be a data warehouse containing various databases and tables containing maritime related data.

The tables 134 may contain pre-computed data relating to vessel tracking information. Vessel tracking data, such as raw AIS data, may be ingested and processed at a data processing server, and then stored in one or more tables 134. Each table may have an associated update frequency. The update frequency of a table may differ from another table, and may range from, for example, live updating (e.g., scheduled automatically at intervals of 10 minutes, or regularly executed batched on-line updates), to daily updating, to static data (i.e., not updated at any regular interval).

For example, a vessel position table may contain current positions of vessels corresponding to a vessel identifier, such as the speed of vessels, headings of vessel, and other similar information. A ports table can contain information about different ports around the world, such as the country the port is located in, and location details of the port. A bespoke vessel data port may offer rich data about a vessel's characteristics. Data relating to the manufacturing date, ship type, flag, and more, are stored for each vessel identifier. A daily GHG emissions table may store data about daily cumulative greenhouse gas emissions for different vessel types. A port visits table may record port visits for each vessel, allowing for historical location data for vessels. An AIS detections associations table may provide data relating to dark vessel detections. A geofences table may provide information about active geofences and the state of the geofence. A rendezvous summary table may provide data into vessel rendezvous. A port visits table may contain data about vessels that have visited a port. A port country table may list the ports and their locations.

In some embodiments, the maritime database system 130 can provide user specific information. The user specific information can be information that is tied to a specific user of the maritime database system 130 system. For example, the user specific data may include geofences that are configured by the user, or regions of interest that are designated as such by a user.

Maritime database system 130 may implement one or more APIs 302 for interacting with the contents of tables 134. One API endpoint may be implemented for each table. Optionally, multiple API endpoints may be implemented for a table, with the different API endpoints focusing on specific aspects of the information. The API may be configured to facilitate the structured retrieval of data from tables 134. The API may return a specific output from a desired table based on the input parameters. The output may include data relating to a specified vessel about a specific maritime topic, such as data on the current position data of a specific vessel. For example, an API endpoint for obtaining a vessel last position from a vessel last location table may be configured to take in a vessel identifier as an input parameter and return the current position of the vessel from the vessel last position table.

Referring back to FIG. 1, functions for communicating with API endpoints 302 of maritime database system 130 may be included in the plurality of tools 132. In this way, access to data within the tables 134 of maritime database system 130 may be available to agent 112 and LLM 120. This may provide LLM 120 with the ability to access specific maritime data relating to more targeted and specific inputs. A function may be configured for each API endpoint 302.

Agent 112 may be configured to generate a grammar for constraining the structure of the output of the LLM 120. For example, agent 112 may be configured to generate a formal Backus-Naur form grammar. Alternatively or additionally, the agent 112 may be able to generate a grammar for JSON. The agent 112 may provide the grammar to the LLM 120. For example, the agent 112 may pass the grammar to LLM 120 as a part of a prompt, which may facilitate the LLM 120 producing outputs adhering to the grammar.

The user device 102 may be connected to system 110 through network 104. The user device may be a computing device capable of communicating with system 110, such as a personal computer, phone, tablet, terminal, or any other capable device. System 110 may be capable of providing a user interface to be rendered on user device 102 to facilitate the user's interaction with system 110. For example, system 110 may generate user interface elements for rendering on the user device.

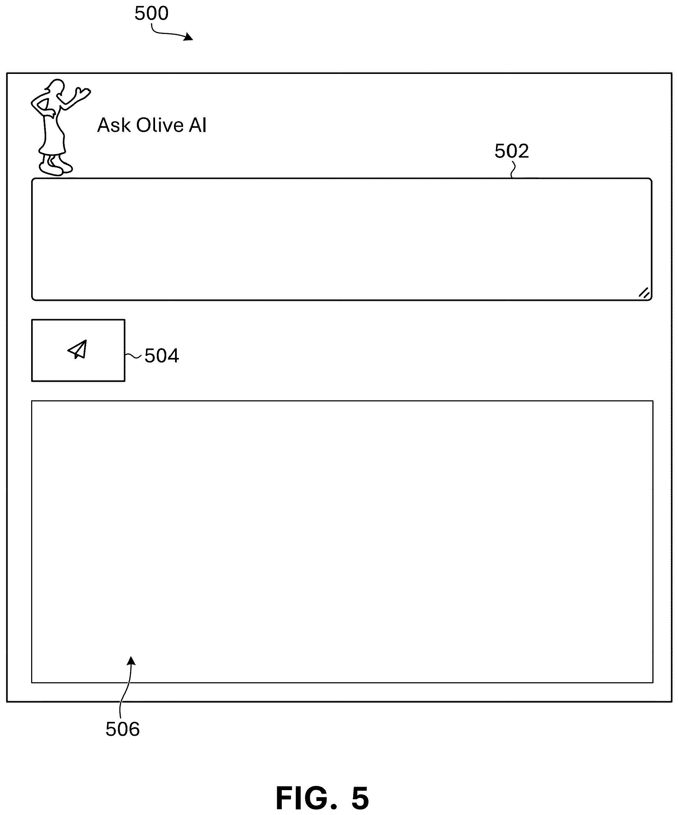

An example user interface 500 is shown in FIG. 5. User interface 500 includes a textbox 502 for entering a user query containing a natural language question about a maritime related topic. User interface 500 may further include a user interface element 504 to initiate the transmission of the user query entered in textbox 502 to system 110 to respond to the user query, such as a button. User interface 500 may also include a text output area 506 where the response to the user query may be displayed.

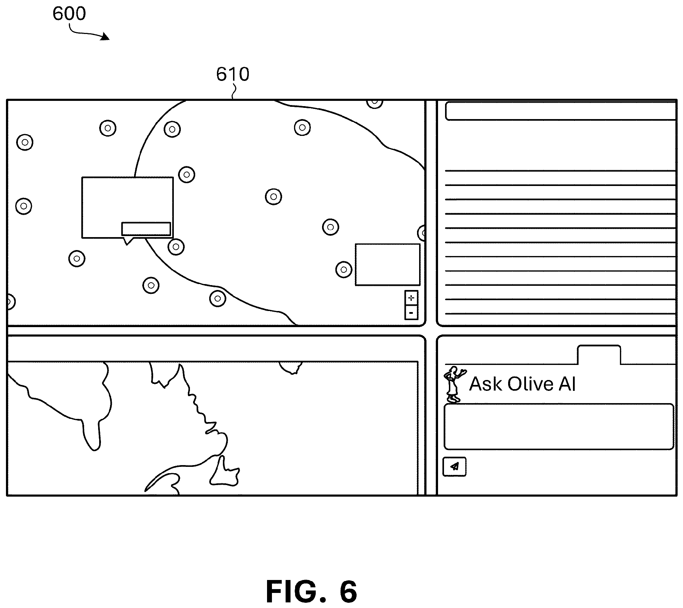

In some embodiments, the user interface element that is rendered may be a map. Referring to FIG. 6, a map element 610 is shown for display in user interface 600. A user may be able to interact with the map by clicking on various locations within the map. The map element may thus serve as an input mechanism. The clicked location may be provided to system 110 as a part of the user query, providing further contextual information about the question that is asked. In some embodiments, map 610 may be configured to display locations relevant to the response to the natural language question. For example, if a question asked about the location of a vessel, and the response mentioned a specific port, map 610 may be configured to show and render the location of the port. In this way, the map element may also function as an output mechanism to display further locational information relevant to the response to the natural language question.

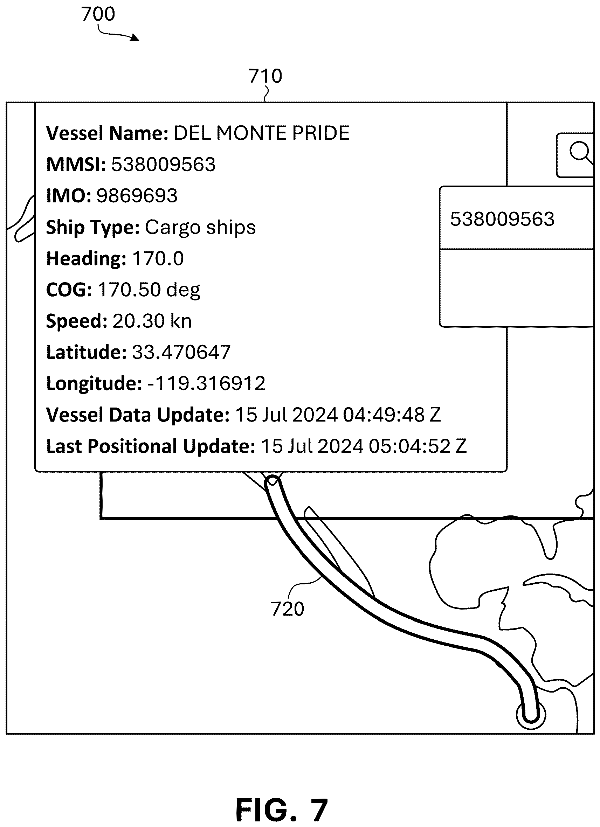

In some embodiments, the map may display additional information relevant to the user query. For example, FIG. 7 shows an example map element 700. Map element 700 contains an overlay textbox 710. For example, a user query may ask for information relating to the path of a vessel. Overlay textbox 710 may contain information about the vessel, which may be returned in addition to an answer to the originally posed question as a part of a response from system 110. In some embodiments, a vessel path 720 can be displayed based on the response from system 110. For example, system 110 may produce a response including coordinates corresponding to the path of the vessel in question, which may be displayed on the map element 700.

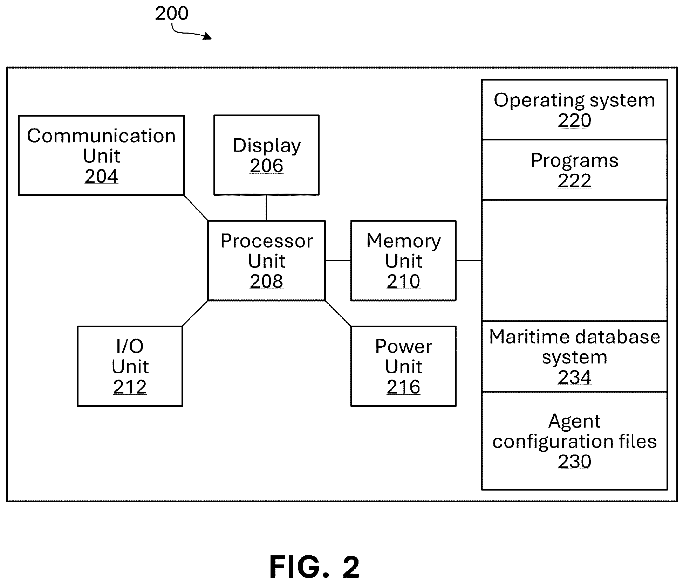

In some embodiments, system 110 may be implemented on a server. Referring next to FIG. 2, a block diagram of a server 200 that may implement system 110 is shown in accordance with one or more embodiments.

The server 200 may include communication unit 204, display 206, I/O unit 212, processor unit 208, memory unit 210, user interface engine 214, and power unit 216. The memory unit 210 has operating system 220, programs 222, agent configuration files 230, and maritime database system 234. The server 200 may be a virtual server on a shared host, or may itself be a physical server.

The communication unit 204 may be a standard network adapter such as an Ethernet or 802.11x adapter. The processor unit 208 may include a standard processor, such as the Intel Xeon processor, for example. Alternatively, there may be a plurality of processors that are used by the processor unit 208 and may function in parallel. Alternatively, there may be a plurality of processors including a Central Processing Unit (CPU) and a Graphics Processing Unit (GPU). The GPU may be, for example, from the GeForce^{®} family of GPUs from Nvidia^{®}, or the Radeon^{®} family of GPUs from AMD^{®}. There may be a plurality of CPUs and a plurality of GPUs.

I/O unit 212 provides access to server devices including disks and peripherals. The I/O hardware provides local storage access to the programs running on server 200.

The power unit 216 provides power to the server 200.

Memory unit 210 may have an operating system 220, programs 222, data connector 224, data ingestion engine 226, agent 112, and tools 132.

The operating system 220 may be a Microsoft Windows Server^{®} operating system, or a Linux-based operating system, or another operating system.

The programs 222 comprise program code that, when executed, configures the processor unit 208 to operate in a particular manner to implement various functions and tools for the server 200.

Agent configuration files 230 may contain the necessary data for operating the agent 112 of FIG. 1 in accordance with the described operation. For example, libraries for running the agent in accordance with various frameworks may be included, such as the llama.cpp library or the DSPy framework. Program code for the operation of the agent may be included, such as, for example, Python files defining the operational flow of the agent. Program code for implementing tools 132 may be included in agent configuration files 230. Further, prompts to be used by the agent when interacting with the LLM may be included in agent configuration files 230.

Optionally, maritime database system 234 may be hosted by server 200. The maritime database system 234 may correspond to the maritime database system 130 of FIG. 1. In an alternate embodiment, maritime database system may run on a separate server from the server 200 and may be available via communication unit 204.

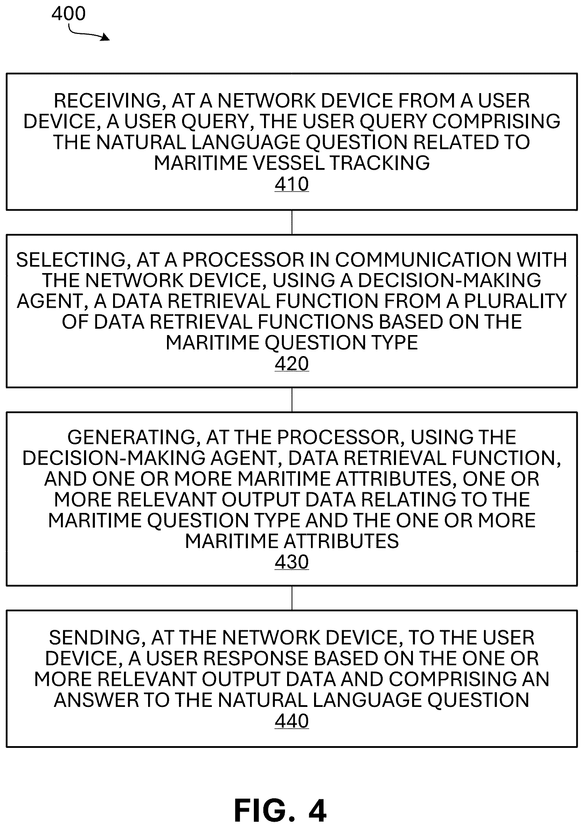

Reference is next made to FIG. 4, which shows an example method 400 for processing a natural language question related to maritime vessel tracking using system 110 of FIG. 1. The method begins, at 410, with receiving, at a network device from a user device, a user query. The user query may contain a natural language question related to maritime vessel tracking. The network device may be communication unit 204 of FIG. 2. The user device may be user device 102, as shown in FIG. 1.

The user query may be entered directly by the user through a user interface at the user device. The user interface may, for example, contain a textbox to enter the query. The user query can also draw data from other user interface elements. For example, in some embodiments, a map may be provided on the user interface. A user may be able to click on a location shown on the map. The location clicked may be added to the written user query as additional context information into the input prompt.

The user query may be associated with a maritime question type. The maritime question type can be indicated by the natural language question. For example, the natural language question may be "tell me all the vessels that came to port XXX last year." This question may be associated with a "port visit" question type. The maritime question type may alternatively or additionally be indicated by other means, such as, for example, the user selecting a location on a map on a user interface.

The natural language question may also contain one or more maritime identifiers. The maritime identifier may be an identifier associated with a maritime vessel related object, such as an MMSI number or an IMO number. The maritime identifier may additionally or alternative specify the name of a port or vessel. For example, if the natural language question was "how much carbon dioxide emissions has the vessel Vernadsky produced in the last month?", the vessel name Vernadsky may be the maritime identifier.

The method proceeds to 420 with selecting, at a processor in communication with the network device, using a decision-making agent, a data retrieval function from a plurality of data retrieval functions based on the maritime question type.

The data retrieval function may be configured to generate one or more relevant output data related to the maritime question type based on the one or more maritime identifiers. For example, the data retrieval function may be an API function. The data retrieval function may correspond to an API endpoint or table of a maritime database system relating to the maritime question type. For example, the data retrieval function may be API endpoints 302 of FIG. 3. A function may be defined for each API endpoint 302 to retrieve data from a particular table corresponding to that API endpoint of the maritime database system 130. The API endpoints may be configured to retrieve a data from a table of the maritime database system based on input parameters to the API. The input parameters may be the maritime identifiers. For example, if the data retrieval function is an API function configured to retrieve an estimated time of arrival (ETA) of a vessel based on the IMO number of the vessel, the IMO number may be provided as a parameter to the API. The API function may return the ETA of the vessel corresponding to the IMO number.

The one or more relevant output data may contain processed data derived from automatic identification system data. For example, the table from the maritime database system from which an API is retrieving data from can contain data that was generated through a process in order obtain specific useful quantities, such as estimated times of arrival for vessels. For example, a data ingestion and processing workflow may be set up to obtain raw AIS data from AIS data sources. This data may be processed through a processing pipeline to obtain processed data stored in the table. As an example, AIS data related to vessel tracking information can be used and processed in order to infer estimated times of arrival, which may be stored in a table in the maritime data system. The one or more relevant data obtained from this table may be the ETA data generated through this process.

The data retrieval may be configured to provide a size-constrained response related to the maritime question type and the vessel. For example, an API function may be configured to return a specific response that contains only relevant data and is below a certain size. As described above, external sources containing repositories of information can return unnecessary information or large amounts of data. The data retrieval function may be structured to mitigate such issues.

For example, the API endpoint may be configured to ensure a limited sized constraint. As another example, the API function implemented for the LLM to interact with the API endpoint may implement data validation. For example, data validation tools like Pydantic can be used. Pydantic models, which may ensure data conformance with predefined schemas, including type checks, size constraints, and format validation, may be configured for validating output of the API function in a way that limits the size of the returned string. Additionally or alternatively, the data validation tools can prevent the LLM from expending computational resources on analyzing excessively sized and potentially irrelevant information.

The decision-making agent may be agent 112 of FIG. 1. The decision-making agent may be configured to use an LLM in operation, as per agent 112 of FIG. 1. For example, the selecting the data retrieval function may involve the decision-making agent sending a first prompt to the LLM. The first prompt may include the user query and a list of available tools. The list of available tools can include data retrieval functions. For example, the first prompt may include a listing of all available functions with descriptions of the available functions that the agent can use to resolve the question. Alternatively, the prompt can point towards a file where the functions are stored, and the LLM may be capable of loading and reading the file as a part of the input prompt. Based on the prompt containing the user query and the available data retrieval functions, the LLM can generate an output that includes a decision to invoke the data retrieval function.

The method proceeds to 430 with generating, at the processor, using the decision-making agent, data retrieval function, and one or more maritime identifiers, the one or more relevant output data. For example, the decision-making agent can invoke an API function, which may return the relevant output data. This can include generating, at the processor, using the decision-making agent, one or more parameters for the data retrieval function based on the user query and the one or more maritime identifiers. The data retrieval function can be an API function configured to retrieve data values from the maritime database system. The one or more parameters can include arguments for the data retrieval function, such as arguments for an API function.

The generating or more parameters for the data retrieval function can include generating, at the LLM, the one or more parameters for the data retrieval function based on the user query and the one or more maritime identifiers. For example, the LLM may generate arguments for a function call. In some embodiments, the LLM may generate the arguments for the function at the time it decides to invoke the function as the next action.

The decision-making agent may generate the one or more relevant output data using the data retrieval function based on the one or more parameters. For example, after the LLM has decided to invoke the function and has produced arguments for the function, the decision-making agent may invoke the function using the provided arguments. The function may return the relevant output data to the agent. For example, the LLM may decide to call an API function configured to return the ETA for a vessel given the vessel's IMO number. The LLM may generate the arguments for the function, which may be one or more IMO numbers, based on the user query, or a previous input. The agent may invoke the function using the arguments, which returns the ETA of a vessel with the provided IMO number.

In some embodiments, the method may further include selecting, at the processor, using the decision-making agent, a second data retrieval function from the plurality of data retrieval functions corresponding to the maritime question type based on the relevant data output data. For instance, the decision-making agent may decide to continue to refine its answer. Based on the retrieved data from the data retrieval function, the decision-making agent, using the LLM, may determine that a further tool should be invoked. The LLM may then determine, as a next action, to invoke a second data retrieval function.

The second data retrieval function may be configured to generate a second one or more relevant output data related to the maritime question type based on the one or more maritime identifiers and the one or more relevant output data. For example, the LLM may decide to invoke another API function to retrieve further data. In some cases, the LLM may generate parameters for the second data retrieval function using the data retrieved from the first data retrieval function. For example, a first API call may be made to retrieve an IMO number for a vessel, and a second API call may be made to retrieve an ETA for the vessel based on the IMO number for the vessel.

As may be understood, a third, fourth, or any number of data retrieval function may be further selected and invoked in the process of resolving the user query. The agent may iterate upon its reasoning processed based on the results of the data retrieval function for as long as is required. For example, the result of a data retrieval function may lead the LLM to decide to invoke further tools, or to use further data retrieval functions, in working towards an answer to the query, which may produce results that lead to further actions.

In some embodiments, the one or more relevant output data may be a static value, and the second one or more relevant output data may be a live updated value. The static value may be a value that is not updated at a regular interval, while the live-updated value may be updated at regular intervals based on new received data. For example, the agent may first use an API function to query a static table to obtain a vessel identifier based on a provided vessel name. Using the vessel identifier, the agent may then use a second API function to query a live table to obtain, for example, a position or an ETA of the vessel.

In some embodiments, the one or more relevant output data can include user-specific information, associated with a user of the user device. For example, the user may have specific data linked to an account associated with the user. The account may be configured for the maritime database system. For example, a user may have an account with the OCIANA service provided by GSTS. The specific data may include, for example, geofences configured by the user, or environmental data for desired regions set by the user. The maritime database system may store information about the geofences or desired regions corresponding to particular users. The user may be able to configure the geofences or desired regions through a user interface provided, for example, through a web browser, after logging into the OCIANA service.

An API call can be made to retrieve the user-specific information. For example, an API function could be configured to retrieve the user-specific information associated with the user. The one or more parameters for the data retrieval function may include a credential of the user. The credential could include some way to authenticate that the requestor has authority to access the user specific data, such as, for example, an API key associated with the user, an authenticated token, or an encoded password.

In some embodiments, one of the one or more relevant output data and the second one or more relevant output data can include historical vessel tracking data. For example, historical data from prior years for the location of a vessel may be obtained.

The method proceeds to 440 with sending, at the network device, a user response to the user device. The user response is based on the query response and may be a response to the natural language question. The user response may be generated using the decision-making agent based on the one or more relevant output data and the user query. For example, after the agent generates the one or more relevant output data using the data retrieval function, the agent may pass the one or more relevant output data to the LLM. The LLM may then be configured to generate the user response. The user response may written in a more human-readable format. For example, the one or more relevant output data may be provided in JSON format if retrieved from an API call. The agent may pass the one or more relevant output data in JSON format and the original user query in a prompt. The prompt may contain instructions to generate an English language response to the user query from the relevant output data in JSON format. The LLM may then generate the plain language user response. The agent may take the generated user response and transmit the response to the user device.

Optionally, the method may include sending, at the network device, data corresponding to a plurality of user interface elements to the user for rendering a user interface on the user device. At least one user interface element of the plurality of user interface elements may include a text output element configured to display the user response. For example, the user device may be communicating through a user interface containing a number of user interface elements. A textbox element may be provided. Data relating to the textbox may be transmitted to the user device to update the textbox element such the element displays the user response.

In some embodiments, the user response may include at least one geographical reference, and the at least one user interface element further includes a map element. The data corresponding to the plurality of user interface elements can include data corresponding to the geographical reference on the map element. The geographical reference may be, for example, a location, geofence, region, or any other type of data relating to a specific location. The user interface at the user device may contain a map element configured to render a map and various markings on the map. The user response can then include, in addition to containing the answer to the answer to the natural language question, instructions to move the view of the map element to display the geographical reference. For example, a user response that references a port in Montreal can include instructions to display the location of the Montreal port on the map element on the user interface.

The geographical reference may further be a user defined geographical reference defined by the user stored on the maritime database system. For example, the geographical reference could be a geofence defined by the user of the system.

The present invention has been described here by way of example only. Various modification and variations may be made to these exemplary embodiments without departing from the spirit and scope of the invention, which is limited only by the appended claims.

## Claims

1. A computer-implemented method for processing a natural language question related to maritime vessel tracking, the method comprising:
receiving, at a network device, from a user device, a user query, the user query comprising the natural language question related to maritime vessel tracking, the user query comprising a maritime question type and one or more maritime identifiers;
selecting, at a processor in communication with the network device, using a decision-making agent, a data retrieval function from a plurality of data retrieval functions based on the maritime question type, wherein the data retrieval function is configured to generate one or more relevant output data related to the maritime question type based on the one or more maritime identifiers;
generating, at the processor, using the decision-making agent, the data retrieval function, and the one or more maritime identifiers, one or more relevant output data related to the maritime question type and the one or more maritime attributes; and
sending, at the network device, to the user device, a user response based on the one or more relevant output data, wherein the user response comprises an answer to the natural language question.

2. The method of claim 1, wherein the generating the one or more relevant output data comprises:
generating, at the processor, using the decision-making agent, one or more parameters for the data retrieval function based on the user query and the one or more maritime identifiers; and
generating, at the processor, using the decision-making agent, the one or more relevant output data using the data retrieval function based on the one or more parameters.

3. The method of any of claims 1 or 2, wherein the data retrieval function comprises an API function corresponding to an API endpoint of a maritime database system, the API endpoint configured to retrieve the one or more outputs from the maritime database system.

4. The method of any of claims 1 to 3, wherein:
the decision-making agent is configured to use a large language model (LLM);
the selecting, using the decision-making agent, the data retrieval function further comprises using the LLM; and
the generating, using the decision-making agent, the one or more relevant output data further comprises using the LLM.

5. The method of claim 4, wherein:
the selecting, using the decision-making agent, a data retrieval function from a plurality of data retrieval functions further comprises:
i) sending, from the decision-making agent to the LLM, a first prompt, the first prompt comprising the user query and a list of data retrieval functions corresponding to the plurality of data retrieval functions; and
ii) generating, at the LLM, a decision to invoke the data retrieval function based on the list of data retrieval functions and the user query.

6. The method of claim 4 or 5 when dependent on claim 2, wherein:
the generating or more parameters for the data retrieval function comprises:
i) generating, at the LLM, the one or more parameters for the data retrieval function based on the user query and the one or more maritime identifiers; and
the generating the one or more relevant output data using the data retrieval function based on the one or more parameters comprises:
i) making an API call comprising the one or more parameters to the API endpoint to retrieve the one or more relevant output data.

7. The method of any of claims 1 to 6, further comprising:
selecting, at the processor, using the decision-making agent, a second data retrieval function from the plurality of data retrieval functions corresponding to the maritime question type based on the one or more relevant output data, wherein the second data retrieval function is configured to generate a second one or more relevant output data related to the maritime question type based on the one or more maritime identifiers and the one or more relevant output data.

8. The method of any of claims 1 to 7, further comprising:
generating, at the processor, using the decision-making agent, the user response based on the one or more relevant output data and the user query; and/or
sending, at the network device, data corresponding to a plurality of user interface elements to the user for rendering a user interface on the user device, wherein at least one user interface element of the plurality of user interface elements comprises a text output element configured to display the user response.

9. The method of any of claims 1 to 8, wherein the user response comprises at least one geographical reference, and the at least one user interface element further comprises a map element, and the data corresponding to the plurality of user interface elements comprises data corresponding to the geographical reference on the map element.

10. A system for processing a natural language question related to maritime vessel tracking, the system comprising:
a network device, configured to:
i) receive, from a user device, a user query, the user query comprising the natural language question related to maritime vessel tracking, the user query comprising a maritime question type and one or more maritime identifiers; and
ii) send, to the user device, a user response based on the one or more relevant output data, wherein the user response comprises an answer to the natural language question; and
a processor in communication with the network device, configured to:
i) select, using a decision-making agent, a data retrieval function from a plurality of data retrieval functions based on the maritime question type, wherein the data retrieval function is configured to generate one or more relevant output data related to the maritime question type based on the one or more maritime identifiers; and
ii) generate, using the decision-making agent, data retrieval function, and one or more maritime identifiers, one or more relevant output data, the one or more relevant output data.

11. The system of claim 10, wherein the processor is configured to generate the one or more relevant output data by:
generating, using the decision-making agent, one or more parameters for the data retrieval function based on the user query and the one or more maritime identifiers; and
generating, using the decision-making agent, the one or more relevant output data using the data retrieval function based on the one or more parameters.

12. The system of any of claims 10 or 11, wherein the data retrieval function comprises an API function corresponding to an API endpoint of a maritime database system, the API endpoint configured to retrieve the one or more outputs from the maritime database system.

13. The system of any of claims 10 to 12, wherein:
the decision-making agent is configured to use a large language model (LLM);
the processor being configured to select, using the decision-making agent, a data retrieval function, further comprises using the LLM; and
the processor being configured to generate, using the decision-making agent, data retrieval function, and one or more maritime identifiers, one or more relevant output data, further comprises using the LLM.

14. The system of claim 13, wherein:
the processor is further configured to select, using the decision-making agent, a data retrieval function from a plurality of data retrieval functions by:
i) sending, from the decision-making agent to the LLM, a first prompt, the first prompt comprising the user query and a list of data retrieval functions corresponding to the plurality of data retrieval functions; and
ii) generating, at the LLM, a decision to invoke the data retrieval function based on the list of data retrieval functions and the user query.

15. The system of claims 13 or 14 when dependent on claim 11, wherein:
the processor is further configured to generate one or more parameters for the data retrieval function by:
i) generating, at the LLM, the one or more parameters for the data retrieval function based on the user query and the one or more maritime identifiers; and
the processor is further configured to generate the one or more relevant output data using the data retrieval function based on the one or more parameters by:
i) making an API call comprising the one or more parameters to the API endpoint to retrieve the one or more relevant output data.
